# EUROPÄISCHE PATENTSCHRIFT

(11) **EP 2 338 731 B1**
(45) Veröffentlichungstag und Bekanntmachung des Hinweises auf die Patenterteilung: **03.09.2014**
(21) Anmeldenummer: 09177967.8
(22) Anmeldetag: 04.12.2009
(51) Int. Cl.: B60Q 1/14

(54) **Steuergerät zur Steuerung von Fahrzeugscheinwerfern zum Erzeugen einer Lichtverteilung mit nachführbaren vertikalen Hell-Dunkel-Grenzen**
Control device for controlling vehicle headlights to generate a light distribution with trackable vertical bright-dark boundaries
Appareil de commande destiné à la commande de phares de véhicule pour générer une répartition d'éclairage à ligne de coupure verticale adaptative

(43) Veröffentlichungstag der Anmeldung: 29.06.2011
(73) Patentinhaber: Hella KGaA Hueck & Co., 59552 Lippstadt (DE)
(72) Erfinder: Hüster, Christian, 33154 Salzkotten (DE); Wilks, Carsten, 59555 Lippstadt (DE); Schmidt, Christian, 33106 Paderborn (DE)

(56) Entgegenhaltungen:
- EP-A1- 1 780 462
- EP-A2- 2 116 421
- DE-A1-102007 040 042
- DE-A1-102008 014 182
- DE-A1-102008 025 808
- DE-A1-102008 060 949

## Beschreibung

### Beschreibung

Die Erfindung betrifft ein Steuergerät zur Steuerung von Fahrzeugscheinwerfern zum Erzeugen einer Lichtverteilung mit nachführbaren vertikalen Hell-Dunkel-Grenzen zum Entblenden von vorrausfahrenden oder entgegenkommenden Fahrzeugen,
- mit einem Eingang zum Einlesen von Objektwinkeln des zu entblendenden Fahrzeugs oder eines Bildsignals der vor dem Kraftfahrzeug liegenden Verkehrssituation, aus dem durch ein Mittel zum Ermitteln von Objektwinkeln des Steuergeräts Objektwinkel des zu entblendenden Fahrzeugs ermittelbar sind,
- mit einem Mittel zum Ermitteln von vertikalen Hell-Dunkel-Grenzen,
- mit einem Mittel zum Erzeugen von Stellsignalen zum Einstellen der Hell-Dunkel-Grenzen der Lichtverteilung und
- mit einem oder mehreren Ausgängen, über die die Stellsignale an die Fahrzeugscheinwerfer bzw. an Stellmittel der Fahrzeugscheinwerfer übermittelbar sind.

Aus dem Stand der Technik sind verschiedene Fahrzeuge mit Scheinwerfern bekannt, bei denen die vertikale Hell-Dunkel-Grenze zum Entblenden von vorrausfahrenden oder entgegenkommenden Fahrzeugen eingestellt werden kann. Dazu werden ein rechter und ein linker Objektwinkel bestimmt. Die Objektwinkel beziehen sich auf die äußerst links und die äußerst rechts erkannte(n) und als relevant eingestufte(n) Lichtquelle(n) eines zu entblendenden Fahrzeugs. Die vertikalen Hell-Dunkel-Grenzen der Lichtverteilung werden entsprechend der Objektwinkel eingestellt. Wenn sich die Lage der als relevant eingestuften Lichtquellen während der Fahrt ändert, ändert sich der entsprechende Objektwinkel. Dann werden die vertikalen Hell-Dunkel-Grenzen entsprechend den Objektwinkeln nachgeführt. Dazu sind die bekannten Steuergeräte zur Steuerung von Fahrzeugscheinwerfern zum Erzeugen einer Lichtverteilung mit nachführbaren vertikalen Hell-Dunkel-Grenzen eingerichtet.

Die Nachführung der vertikalen Hell-Dunkel-Grenzen erfolgt bei den bekannten Sytemen aufgrund von technisch bedingten Verzögerungen oder Totzeiten nicht zeitgleich zur Änderung der Objektwinkel. Zu Verzögerungen oder Totzeiten kann es zum Beispiel durch Sensoren, Aktoren, Regler bzw. Steuereinheiten und Signalwege kommen. Wenn sich die Objektwinkel sehr schnell ändern, kann dies zur Folge haben, dass die Nachführung so langsam ist, dass eine ausreichende Entblendung nicht mehr erfolgt.

Außerdem können sich Toleranzen der Sensoren oder Regler negativ auf die Nachführung der vertikalen Hell-Dunkel-Grenzen auswirken. Auch die Toleranzen können sich dahingehend bemerkbar machen, dass eine ausreichende Entblendung nicht mehr erfolgt.

Hier setzt die aus dem Dokument DE 10 2008 025 808 A1 bekannte technische Lehre an.

Das hinter der aus dem Dokument DE 10 2008 025 808 A1 bekannten technischen Lehre stehende Problem war es, ein Steuergerät der eingangs genannten Art zu fortzubilden, dass es trotz der Verzögerungen, Totzeiten und/oder Toleranzen für eine ausreichende Entblendung der vorrausfahrenden oder entgegenkommenden Fahrzeuge sorgen kann.

Dieses Problem wurde nach dem Dokument DE 10 2008 025 808 A1 dadurch gelöst, dass mittels des Mittels zum Ermitteln der vertikalen Hell-Dunkel-Grenzen jede einstellbare vertikale Hell-Dunkel-Grenze in Abhängigkeit eines der genannten Objektwinkel und eines Winkelvorhalts ermittelbar ist. Durch den Winkelvorhalt ist es möglich, dass die tatsächlichen, aktuell vorliegenden Objektwinkel von den der Einstellung der Hell-Dunkel-Grenze zugrunde liegendenden vergangenen Objektwinkel abweichen, ohne dass es zu einer Blendung der vorrausfahrenden oder entgegenkommenden Fahrzeuge kommt.

Weiterer Stand der Technik ist in den Dokumenten EP 2 116 421 A2, DE 10 2007 040 042 A1, DE 10 2008 014 082 A1 und DE 10 2008 060949 A1 offenbart.

In dem Dokument DE 10 2008 025 808 A1 werden verschiedene Vorschläge gemacht, den Vorhalt zu bestimmen.

Die Aufgabe der vorliegenden Erfindung ist es einen weiteren Vorschlag zu machen, wie der Vorhalt bestimmt werden kann.

Diese Aufgabe wird efindungsgemäß dadurch gelöst, dass der Winkelvorhalt in Abhängigkeit der Differenz zwischen zwei Objektwinkeln, d. h. dem sogenannten Öffnungswinkel des zu entblendenden Bereichs einstellbar ist.

Der Winkelvorhalt ist vorzugsweise stets positiv und wird zu den ermittelten oder eingelesenen Objektwinkeln hinzuaddiert (rechter Objektwinkel) oder abgezogen (linker Objektwinkel).

Wahlweise oder ergänzend kann der Winkelvorhalt in Abhängigkeit
- von der Relativgeschwindigkeit des Kraftfahrzeuges und des zu entblendenden Fahrzeugs,
- von der Entfernung zwischen dem Kraftfahrzeug und dem zu entblendenden Fahrzeug,
- von der zeitlichen Änderung wenigstens eines Objektwinkels,
- vom Objektwinkel,
- von der Fahrtrichtung des zu entblendenden Fahrzeugs zum Kraftfahrzeug einstellbar sein.

Ein erfindungsgemäßes Steuergerät kann so ausgestaltet sein, dass der Winkelvorhalt mittels wenigstens einer Gleichung durch das Mittel zum Ermitteln berechenbar ist. Ebenso ist es möglich, dass der Winkelvorhalt mittels wenigstens einer Zuordnungsvorschrift durch das Mittel zum Ermitteln ermittelbar ist. Die Zuordnungsvorschrift kann sich aus einer Tabelle ergeben.

Es ist möglich, dass der Betrag des Winkelvorhalts begrenzt ist und einen vorgegebenen Wert nicht übersteigt.

Anhand der beigefügten Zeichnungen wird die Erfindung nachfolgend näher erläutert. Dabei zeigt:
- Fig. 1: eine schematische Darstellung einer Verkehrssituation in der Draufsicht, wie sie bei einem Kraftfahrzeug mit einem Steuergerät zur Steuerung von Fahrzeugscheinwerfem zum Erzeugen einer Lichtverteilung mit nachführbaren vertikalen Hell-Dunkel-Grenzen nach dem Stand der Technik entstehen kann,
- Fig. 2: eine der in Fig. 1 dargestellten entsprechenden Verkehrsituation, wie sie bei einem Kraftfahrzeug mit einem erfindungsgemäßen Steuergerät entstehen kann, und
- Fig. 3: eine Darstellung einer Zuordnung des Winkelvorhafts zu einem Öffnungswinkel.

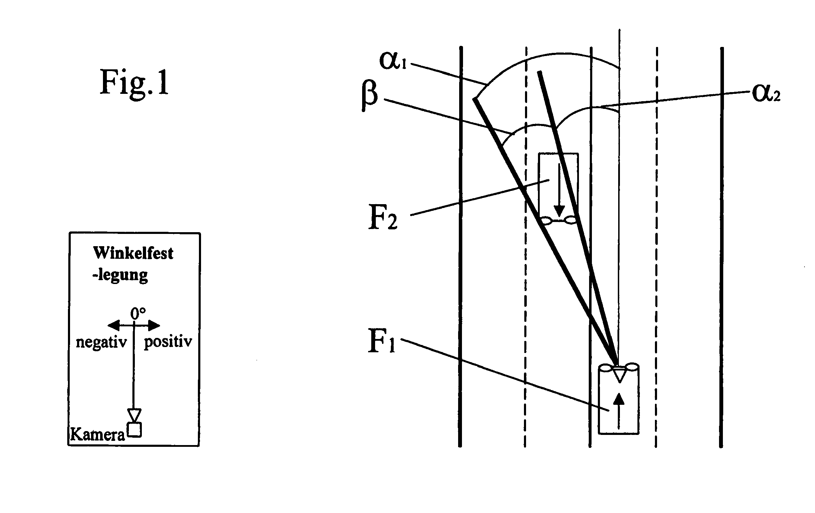

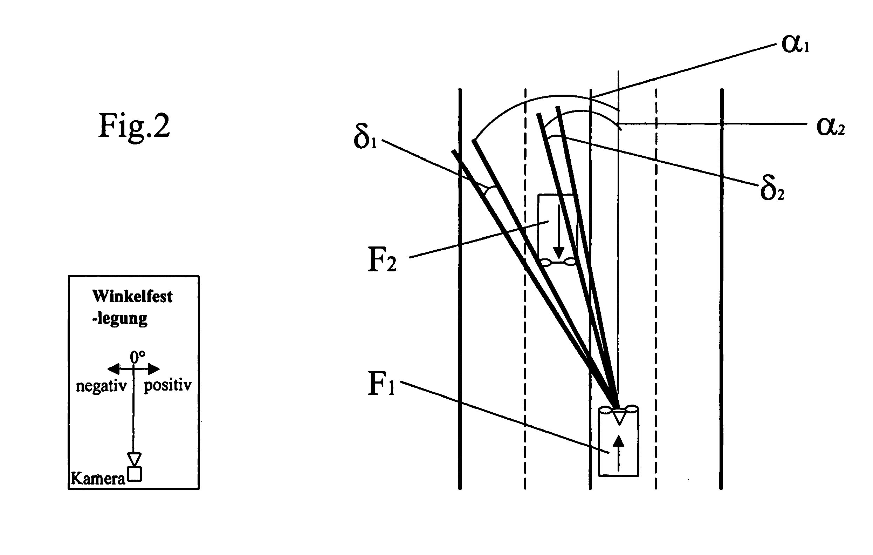

In der in Figur 1 und Figur 2 dargestellten Verkehrssituation begegnen sich zwei Kraftfahrzeuge F1, F2 auf einer Straße mit zwei Fahrstreifen in jede Fahrtrichtung. Die beiden Kraftfahrzeuge F1, F2 sind auf dem jeweils linken Fahrsteifen unterwegs. Das Kraftfahrzeug F1 ist mit einer Kamera K ausgestattet, mit welcher die vor dem Kraftfahrzeug F1 liegende Verkehrssituation erfasst werden kann.

Das von der Kamera K aufgenommene Bild der Verkehrssituation wird von einer dazu eingerichteten, nicht näher beschriebenen Vorrichtung ausgewertet. Dabei werden die für das Einstellen der vertikalen Hell-Dunkel-Grenzen als relevant erkannten Lichtquellen festgestellt. Außerdem werden die Objektwinkel α1, α2 zwischen der Längsrichtung des Kraftfahrzeuges F1 und den als relevant erkannten Lichtquellen ermittelt. Die Informationen über die Objektwinkel α1, α2 werden an ein Steuergerät zur Steuerung der Scheinwerfer mit nachführbaren vertikalen Hell-Dunkel-Grenzen übermittelt. Das Steuergerät ermittelt aus den Objektwinkeln α1, α2 die einzustellenden Hell-Dunkel-Grenzen der Lichtverteilung.

Im Beispiel der Figur 1 werden die Hell-Dunkel-Grenzen in Richtung der Objektwinkel α1, α2 gelegt. Die Hell-Dunkel-Grenzen müssen jedoch nicht in Richtung der Objektwinkel α1, α2 liegen, wenn dies beispielsweise für Fahrten entlang von kurvigen Streckenabschnitten sinnvoll ist. Ist die Lage der Hell-Dunkel-Grenzen festgelegt, werden dazu die Stellgrößen ermittelt, die an die Stellmittel der Scheinwerfer gegeben werden. Es wird dadurch eine linke Hell-Dunkel-Grenze eingestellt, die auf der linken Kante der linken relevanten Lichtquelle liegt und eine rechte Hell-Dunkel-Grenze eingestellt, die auf der rechten Kante der rechten relevanten Hell-Dunkel-Grenze liegt.

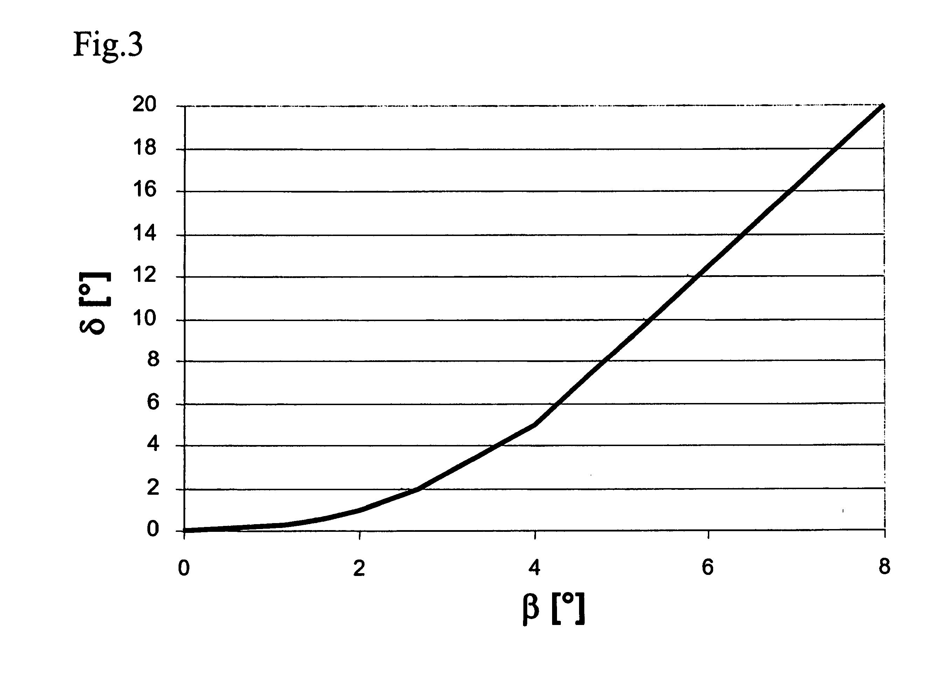

Im erfindungsgemäßen Steuergerät wird aus den Objektwinkeln α1, α2 der Öffnungswinkel β bestimmt. Dazu wird der linke Objektwinkel α1 vom rechten Objektwinkel α2 subtrahiert. Unter Beachtung der in der Figur 1 angegebenen Winkelfestlegung ergibt sich daraus eine positive Größe. In Abhängigkeit vom Öffnungswinkel β mittels der in Figur 3 angegebenen Zuordnungsvorschrift wird ein Winkelvorhalt δ1, δ2 ermittelt. Dieser Winkelvorhalt δ1, δ2 wird im Beispiel der Figur 2 zur Festlegung der vertikalen Hell-Dunkel-Grenzen berücksichtigt. Die linke Hell-Dunkel-Grenze wird gegenüber der Figur 1 um den Winkelvorhalt δ1 nach links und die rechte Hell-Dunkel-Grenze wird gegenüber der Figur 1 um den Winkelvorhalt δ2 nach rechts verschoben.

### Bezugszeichenliste

- F1: Kraftfahrzeug mit Einstellung der Hell-Dunkel-Grenzen
- F2: zu entblendendes Kraftfahrzeug

- K: Kamera
- α1: linker Objektwinkel
- α2: rechter Objektwinkel
- β: Öffnungswinkel
- δ1: Linker Winkelvorhalt
- δ2: Rechter Winkelvorhalt

## Patentansprüche

1. Steuergerät zur Steuerung von Scheinwerfern eines Kraftfahrzeuges (F1) zum Erzeugen einer Lichtverteilung mit nachführbaren vertikalen Hell-Dunkel-Grenzen zum Entblenden von vorrausfahrenden oder entgegenkommenden Fahrzeugen (F2),
mit einem Eingang zum Einlesen von Objektwinkeln (α1, α2) des zu entblendenden Fahrzeugs (F2) oder eines Bildsignals der vor dem Kraftfahrzeug liegenden Verkehrssituation, aus dem durch ein Mittel zum Ermitteln von Objektwinkeln (α1, α2) des Steuergeräts Objektwinkel (α1, α2) des zu entblendenden Fahrzeugs ermittelbar sind,
mit einem Mittel zum Ermitteln von vertikalen Hell-Dunkel-Grenzen,
mit einem Mittel zum Erzeugen von Stellsignalen zum Einstellen der HellDunkel-Grenzen und
mit einem oder mehreren Ausgängen, über die die Stellsignale an die Fahrzeugscheinwerfer bzw. an Stellmittel der Fahrzeugscheinwerfer übermittelbar sind,
wobei mittels des Mittels zum Ermitteln der vertikalen Hell-Dunkel-Grenzen jede einstellbare vertikale Hell-Dunkel-Grenze in Abhängigkeit eines der Objektwinkel (α1, α2) und eines Winkelvorhalts (δ1, δ2) ermittelbar ist,
**dadurch gekennzeichnet, dass**
der Winkelvorhalt (δ1, δ2) in Abhängigkeit der Differenz zwischen zwei Objektwinkeln (α1, α2), d. h. dem sogenannten Öffnungswinkel (β) einstellbar ist.

2. Steuergerät nach Anspruch 1, **dadurch gekennzeichnet, dass** der Winkelvorhalt (δ1, δ2) in Abhängigkeit von der Relativgeschwindigkeit des Kraftfahrzeuges und des zu entblendenden Fahrzeugs einstellbar ist.

3. Steuergerät nach Anspruch 1 oder 2, **dadurch gekennzeichnet, dass** der Winkelvorhalt (δ1, δ2) in Abhängigkeit von der Entfernung zwischen dem Kraftfahrzeug und dem zu entblendenden Fahrzeug einstellbar ist.

4. Steuergerät nach einem der Ansprüche 1 bis 3, **dadurch gekennzeichnet, dass** der Winkelvorhalt (δ1, δ2) in Abhängigkeit von der zeitlichen Änderung wenigstens eines Objektwinkels (α1, α2) einstellbar ist.

5. Steuergerät nach einem der Ansprüche 1 bis 4, **dadurch gekennzeichnet, dass** der Winkelvorhalt (δ1, δ2) in Abhängigkeit vom Objektwinkel (α1, α2) einstellbar ist.

6. Steuergerät nach einem der Ansprüche 1 bis 5, **dadurch gekennzeichnet, dass** der Winkelvorhalt (δ1, δ2) mittels wenigstens einer Gleichung durch das Mittel zum Ermitteln berechenbar ist.

7. Steuergerät nach einem der Ansprüche 1 bis 6, **dadurch gekennzeichnet, dass** der Winkelvorhalt (δ1, δ2) mittels wenigstens einer Zuordnungsvorschrift durch das Mittel zum Ermitteln ermittelbar ist.

8. Steuergerät nach einem der Ansprüche 1 bis 7, **dadurch gekennzeichnet, dass** der Winkelvorhalt (δ1, δ2) in Abhängigkeit von der Fahrtrichtung des zu entblendenden Fahrzeugs zum Kraftfahrzeug einstellbar ist.

9. Steuergerät nach einem der Ansprüche 1 bis 8, **dadurch gekennzeichnet, dass** der Betrag des Winkelvorhalts (δ1, δ2) begrenzt ist.

## Claims

1. Control unit for the control of headlamps of a motor vehicle (F1) for the generation of a light distribution with adjustable vertical cut-off lines for the un-dazzling of vehicles driving ahead or oncoming vehicles (F2),
having an input for the reading of object angles (α1, α2) of the vehicle to be un-dazzled (F2) or of an image signal of the traffic situation ahead of the motor vehicle, from which object angles (α1, α2) of the vehicle to be un-dazzled can be determined by means of a means for the determination of object angles (α1, α2) of the control unit,
having a means for the determination of vertical cut-off lines,
having a means for the generation of control signals for the adjustment of the cut-off lines and
having one or several outputs by means of which the control signals can be transmitted to the vehicle headlamps resp. to the adjustment means of the headlamps,
wherein any adjustable vertical cut-off line can be determined as a function of one of the object angles (α1, α2) and an angle allowance (δ1,δ2 by means of a means for the determination of the vertical cut-off lines,
**characterized in that**
the angle allowance (δ1,δ2) is adjustable depending on the difference between two object angles (α1, α2), i.e. the aperture angle (β).

2. Control unit according to Claim 1, **characterized in that** the angle allowance (δ1,δ2) is adjustable depending on the relative speed of the motor vehicle and the vehicle to be un-dazzled.

3. Control unit according to Claim 1 or 2, **characterized in that** the angle allowance (δ1,δ2) is adjustable depending on the distance between the motor vehicle and the vehicle to be un-dazzled.

4. Control unit according to one of the Claims 1 to 3, **characterized in that** the angle allowance (δ1,δ2) is adjustable depending on the temporal change of at least one object angle (α1, α2).

5. Control unit according to one of the Claims 1 to 4, **characterized in that** the angle allowance (δ1,δ2 is adjustable depending on the object angle (α1, α2).

6. Control unit according to one of the Claims 1 to 5, **characterized in that** the angle allowance (δ1,δ2) can be calculated by means of at least one equation by means of the means for determination.

7. Control unit according to one of the Claims 1 to 6, **characterized in that** the angle allowance (δ1,δ2) can be determined by means of at least one assignment rule by means of the means for determination.

8. Control unit according to one of the Claims 1 to 7, **characterized in that** the angle allowance (δ1,δ2) can be adjusted depending on the driving direction of the vehicle to be un-dazzled relative to the vehicle.

9. Control unit according to one of the Claims 1 to 8, **characterized in that** the value of the angle allowance (61,62) is limited.

## Revendications

1. Boîtier électronique pour commander des projecteurs d'un véhicule automobile (F1) pour réaliser une répartition lumineuse avec des coupures clair-obscur verticales ajustables pour non éblouir des véhicules qui précédent ou qui roulent en sens inverse (F2),
avec une entrée pour enregistrer des angles d'objet (α1, α2) du véhicule à non éblouir (F2) ou un signal d'image de la situation de trafic devant le véhicule automobile par lequel des angles d'objet (α1, α2) du véhicule à non éblouir peuvent être déterminés par un moyen de détermination des angles d'objet (α1, α2) du boîtier électronique,
avec un moyen de détermination des coupures clair-obscur verticales,
avec un moyen pour engendrer des signaux de réglage pour ajuster les coupures clair-obscur et
avec une ou plusieurs sorties par lesquelles les signaux de réglage peuvent être transmis aux projecteurs du véhicule respectivement aux moyens de réglage des projecteurs du véhicule,
chaque coupure clair-obscur verticale ajustable en fonction d'un des angles d'objet (α1, α2) et d'un angle de dérive (δ1, δ2) étant déterminable par le moyen de détermination des coupures clair-obscur verticales,
**caractérisé en ce que**
l'angle de dérive (δ1, δ2) est ajustable en fonction de la différence entre deux angles d'objet (α1, α2), c'est-à-dire le soi-disant angle d'ouverture (β).

2. Boîtier électronique selon la revendication 1, **caractérisé en ce que** l'angle de dérive (δ1, δ2) est ajustable en fonction de la vitesse relative du véhicule automobile et celle du véhicule à non éblouir.

3. Boîtier électronique selon la revendication 1 ou 2, **caractérisé en ce que** l'angle de dérive (δ1, δ2) est ajustable en fonction de la distance entre le véhicule automobile et le véhicule à non éblouir.

4. Boîtier électronique selon l'une des revendications 1 à 3, **caractérisé en ce que** l'angle de dérive (δ1, δ2) est ajustable en fonction de la variation temporelle d'au moins un angle d'objet (α1, α2).

5. Boîtier électronique selon l'une des revendications 1 à 4, **caractérisé en ce que** l'angle de dérive (δ1, δ2) est ajustable en fonction de l'angle d'objet (α1, α2).

6. Boîtier électronique selon l'une des revendications 1 à 5, **caractérisé en ce que** l'angle de dérive (δ1, δ2) est calculable par le moyen de détermination au moyen d'au moins une équation.

7. Boîtier électronique selon l'une des revendications 1 à 6, **caractérisé en ce que** l'angle de dérive (δ1, δ2) est déterminable par le moyen de détermination au moyen d'au moins une règle d'attribution.

8. Boîtier électronique selon l'une des revendications 1 à 7, **caractérisé en ce que** l'angle de dérive (δ1, δ2) est ajustable en fonction du sens de circulation du véhicule à non éblouir par rapport au véhicule automobile.

9. Boîtier électronique selon l'une des revendications 1 à 8, **caractérisé en ce que** la valeur de l'angle de dérive (δ1, δ2) est limitée.
